# EUROPEAN PATENT SPECIFICATION

(11) **EP 3 566 206 B1**
(45) Date of publication and mention of the grant of the patent: **10.11.2021**
(21) Application number: 17825110.4
(22) Date of filing: 28.11.2017
(51) Int. Cl.: G06T 7/579, G06K 9/00

(54) **VISUAL ODOMETRY**
VISUELLE ODOMETRIE
ODOMÉTRIE VISUELLE

(30) Priority: 03.01.2017 DE 102017100062
(43) Date of publication of application: 13.11.2019
(73) Proprietor: Connaught Electronics Ltd., Tuam, County Galway (IE)
(72) Inventor: ERMILIOS, Pantelis, Tuam County Galway (IE); HORGAN, Jonathan, Tuam County Galway (IE); HUGHES, Ciáran, Tuam County Galway (IE); FRIEL, Myles, Tuam County Galway (IE)
(74) Representative: Jauregui Urbahn, Kristian
(86) International application number: PCT/EP2017/080683
(87) International publication number: WO 2018/127329

(56) References cited:
- WO-A2-2004/059577
- US-A1- 2013 083 021
- US-A1- 2014 037 136

## Description

The present invention refers to a method for creation of an elevation map based on a single camera.

An embodiment of the present invention refers to a method for performing kerb detection based on a single camera, comprising the steps of performing creation of an elevation map according to the above method, and performing kerb detection based on the created elevation map.

The present invention further refers to a camera system comprising a camera and a processing unit, whereby the camera is adapted to provide frames to the processing unit, and the processing unit is adapted to perform the above method.

An embodiment of the present invention refers to a driving assistance system comprising a camera system as specified above.

A further embodiment of the present invention refers to a motorized vehicle comprising a driving assistance system as specified above.

Most vehicles are equipped with sensors that can measure linear speed and rotational speed (yaw-rate), wheel RPM and steering angle. However these measurements are subject to latency and their accuracy is limited since they do not account for dynamic effects such as e.g. tire slip. Moreover, rotational changes about lateral and longitudinal axes (pitch and roll), which occur constantly due to the vehicle dynamic response to uneven ground, acceleration and turning, are typically not measured or the measurements are inaccurate and not fit for some applications. More accurate and complete measurements can be obtained purely by optical means and image processing techniques to determine the exact motion of the vehicle in six degrees of freedom e.g. by analyzing feature correspondences between successive images from one or more on-board cameras.

There are different possible approaches known in the Art for feature detection and matching, each offering advantages and disadvantages and best suited for the operating conditions of a particular application. One important aspect in a real-time system is the trade-off that has to be made between the efficiency and the accuracy or repeatability of the feature detection. One possibility is to detect and match salient features in the general environment around the vehicle. Such features are typically available in large quantities. However, there is an increased probability of outliers due to moving objects and greater spatial uncertainty in the localization of distant features. A bucketing technique can be used to ensure a fair distribution of selected features across the entire scene. However, scaling, rotation and partly affine distortion invariant feature detectors such as SIFT or SURF, which would be advantageous in this scenario, are rather complex and require high computational power.

In this context, the document Automatic Kerb Detection for Assistance in Navigation, Loreto Susperregi et al., Assistive Technology Research Series, Volume 20: Challenges for Assistive Technology, pages 53 - 57, 2007 deals with kerbs being one of the main architectural barriers that people with disabilities, especially wheelchair users, encounter in urban areas. The paper presents a solution to kerb detection that will be integrated as an assistive function on a motorized wheelchair.

Furthermore, according to the article Vision-based Detection of Kerbs and Steps, September 1997, Stephen Se and Michael Brady, British Machine Vision Conference (BMVC), At Essex, a key component of a technological aid for the partially sighted (TAPS) is a system to detect kerbs and steps. A vision-based kerb detection system uses the Hough Transform to find clusters of parallel lines in the image as evidence for a kerb. This is combined with a stereo vision-based obstacle detection algorithm. Experiments show that kerb regions are identified correctly from the images. An error analysis of the obstacle detection algorithm enables the kerb height, and its uncertainty, to be determined. This system provides part of an obstacle avoidance capability for ASMONC (Autonomous System for Mobility, Orientation, Navigation and Communication), a project which aims to provide a full navigation and mobility capability for partially sighted people. A major requirement for the vision system in ASMONC is to detect small obstacles as well as kerbs/steps to help the user navigate safely along a path.

US 2014/0037136 A1 discloses a method for estimating the relative motion of an object, such as a vehicle or robot, from a sequence of images of an environment near the object acquired by a single camera mounted on the object. The method generates motion estimates for a plane-sweeping procedure that produces dense depth maps for obstacle detection applications.

It is an object of the present invention to provide a method for creation of an elevation map based on a single camera as specified above, a method for performing kerb detection based on a single camera, comprising the steps of performing creation of an elevation map as specified above, a camera system comprising a camera and a processing unit, adapted to perform the above method, a driving assistance system comprising a camera system as specified above, as well as a motorized vehicle comprising a driving assistance system as specified above, which enable an efficient generation of an elevation map, in particular for use in driving assistance systems, which is robust and can be implemented in a cost efficient way.

This object is achieved by the independent claims. Advantageous embodiments are given in the dependent claims.

In particular, the present invention provides a method for creation of an elevation map based on a single camera as defined in claim 1.

An embodiment of the present invention provides a method for performing kerb detection based on a single camera, comprising the steps of performing creation of an elevation map according to the above method, and performing kerb detection based on the created elevation map.

I he present invention further provides a camera system as defined in claim 10.

An embodiment of the present invention further provides a driving assistance system comprising a camera system as specified above.

A further embodiment of the invention provides a motorized vehicle comprising a driving assistance system as specified above.

The basic idea of the invention is to provide a high-level design of a vision algorithm. The algorithm uses a single camera to provide a reliable elevation map by performing the different method steps. Hence, a single camera is used as sensor to sense a surrounding area, so that the elevation map can be created in a cost-efficient way. Furthermore, the above method is generic and robust compared to other approaches. The mapping of the ground surface offers many advantages in an automotive sensor system. Hence, the elevation map can be provided as reliable input to algorithms, which otherwise make assumptions about planar ground surface, thereby increasing robustness of these algorithms. Furthermore, for top view or other view generation, the views can be rendered on to a ground surface elevation map. Still further, the elevation map enables the detection of ramps, etc. that would otherwise not be able to be detected by many types of sensors.

Based on the elevation map, different applications can be performed, e.g. kerb detection in a vicinity of a moving vehicle in real-time with input from a single camera mounted on that vehicle. The single camera refers to the creation of the elevation map within the field of view of the camera. Hence, no stereo cameras are required. Of course, multiple cameras can be provided to create an elevation map covering an extended or 360°field of view. Detection of kerbs is very important e.g. for parking systems, since the ability to localize the parking vehicle against a detected kerb offers significant advantages over systems without kerb detection. View generation can also be adapted based on detected kerbs.

Line or curve fitting can be applied on gradients to detect elongated 3D structures such as kerbs. The elevation gradients can be correlated with 2D image intensity gradients to maximize the response of the filter since when there is a kerb transition in 3D, usually there is also an edge visible in the 2D image. Elevation gradient vectors and image gradient vectors can be correlated with their dot product. Repeating the detection / curve fitting over multiple pairs of key frames close in time robustifies the results, as an integration over time is performed.

The algorithm combines structure-from-motion and dense stereo-matching techniques to recover 3D information from the scene, in particular a digital elevation map of the ground surface. 3D structure extracted from a pair of frames can be supplemented with 2D image gradients and temporal information to improve the detection performance. Although the algorithm is initially aimed towards mapping low-profile features on the ground surface it should be extensible by its design principles to operate on a wider area around the vehicle and from different perspectives.

The step of performing key frame selection to select at least two key frames at two different points of time out of frames provided by a camera requires a selection of two frames as key frames to reduce computational effort and to obtain two key frames with a sufficiently significant change in feature positions. Hence, the two key frames can be selected based on a time difference between the two frames. Additional information can be considered to adapt the selection of key frames, in particular vehicle movement. Hence, when vehicle odometry indicates a significant movement, the time difference between the two key frames can be reduced. On the other hand, it is important that the time between the two key frames is not too big, so that features do not move out of sight of the camera.

The step of performing feature detection and matching based on the selected at least two key frames at two different points of time comprises using a Laplacian-of-Gaussian, Difference-of-Gaussians or similar filters. One possible implementation uses an 11×11 Laplacian on a top-view size of approximately 8m × 12.8m rendered at an image output size of 1280x800 pixels with input image resolution of 1280x800 pixels so that the effective resolution of the top top-view image is 1 cm/pixel. One aspect of the feature matching performed on a top-view is that the matched features lie in the majority near or on the ground plane. This is desirable as the matching location can be predicted very well in approximation from the vehicle odometry. This allows more focused searches only within uncertainty regions resulting in more reliable matches. The uncertainty regions can be derived from the expected maximum calibration error, vehicle odometry error and tolerances in the camera pitch-roll and height due to the dynamic movement of the vehicle. However, to simplify the algorithm, search regions of empirical constant size centered at each predicted feature matching location can be set.

There are different possible approaches to feature detection and matching, each offering advantages and disadvantages and best suited for the operating conditions of a particular application. One important aspect in a real-time system is the trade-off that has to be made between the efficiency and the accuracy or repeatability of the feature detection.

An alternative approach taken by this method in comparison to prior art is to concentrate solely on features on the ground surface in close proximity to the vehicle. This is logical since the road surface provides a stable reference with spatial constraints that can assist the feature matching process as well as the computation of visual odometry. For appearance-based feature matching on a top-view corrected image, scaling, rotation and partly affine distortion invariant feature detectors such as SIFT or SURF can be substituted by trivial template-based matching due to the distortion invariances offered readily by the top-view image correction.

The step of performing coarse outlier rejection for the detected features preferably comprises that feature correspondences are stored as motion vectors. Each motion vector describes a 2D displacement of a feature between the two key-frames with respect to its reference position on the block grid in the first frame. Coarse outliers are rejected with a non-linear filter based on the geometric deviation of each motion vector from its neighbors as in WO 2016/087298 A1. This method is based on the assumption that motion vectors lie approximately on the same plane which is true for the majority of cases. As a side-effect, motion vectors on the transition between planes, e.g. road vs. kerb, or on static objects with height are also rejected. Such motion vectors would be normally allowed in the pose estimation as there is no actual constraint for the motion vectors to lie on the same plane. The benefits of assuming near-coplanar motion vectors for outlier rejection outweigh the loss of a few good motion vectors in some scenes. This step provides a fairly clean set of motion vector for pose estimation.

The coarse outlier rejection supersedes a conditional selection of features. Outliers can be encountered frequently despite strong feature matches. Feature selection often eliminates good features that would have been otherwise inliers. The outlier rejection mechanism takes the burden of qualifying the feature correspondences after unconditional feature matching. One aspect of the feature matching performed on a top-view image is that the matched features lie in their majority near or on the ground plane without needing specialized regions of interest to contain them as is the case with a fisheye image or angled perspective image. Selecting features approximately on the ground surface is desirable as their matching locations can be predicted very well within an uncertainty region from the vehicle odometry. This allows more focused searches i.e. within uncertainty regions which results into more reliable matches given that road texture is typically a weak feature. The uncertainty regions can be derived from the expected maximum calibration error, vehicle odometry error and tolerances in the camera pitch, roll and height due to the dynamic movement of the vehicle. The current implementation uses for simplicity search regions of an empirical constant size centered at the predicted feature matching locations.

The step of performing pose estimation of the camera in respect to the two key frames for stereo rectification refers to estimation of a camera pose difference between the two key-frames based on feature correspondences. The camera pose can be estimated in different ways. Hence, the step of performing pose estimation may comprise performing Niester's five-point algorithm preferably wrapped in a RANSAC framework. This algorithm computes an essential matrix from five 2D-to-2D feature correspondences using an epipolar constraint. The camera pose can be recovered from the essential matrix in a subsequent step. Unlike other algorithms, Niester's algorithm works also for coplanar points. According to the present invention, feature correspondences are expected to be near coplanar in most cases. It is important to note that coplanar correspondences are not imposed by the design of this algorithm. Otherwise, pose estimation could be solved as a homography. This would be undesirable, since the assumption that the ground surface is perfectly flat and that all tracked features are actually on the same plane would give inaccurate results. The relative pose of the camera between the two key-frames is computed in a similar way as described in WO 2016/087298 A1 by minimizing a cost function. In contrast to document WO 2016/087298 A1, which solves a different problem, the new cost function minimizes the triangulation error of back-projected rays from the matched features of the two key-frames. The features from the first key-frame are back-projected into rays in world-space using a nominal pose, e.g. zero rotation and translation, and these rays are stored for reference. An optimizer, such as the Levenberg-Marquardt algorithm assigns a trial rotation and translation to the camera. The features of the second key-frame are back-projected into rays in world-space using this trial rotation and translation. The components of the shortest perpendicular vector between the corresponding rays of the two key-frames are calculated for each feature and stored into the residue vector. The optimizer finds a rotation and translation that minimizes the sum of all squared components of the residue vector, essentially minimizing the skew line distance of the back-projected ray pairs (triangulation error). With this method, an accuracy of less than 0.1 degrees and less than 1 mm absolute error can be achieved.

Outliers may not have been eliminated completely from the previous step, which can impact the accuracy or validity of the solution when one or more gross outliers have entered the cost function. To mitigate this issue, the minimizer can be invoked multiple times removing motion vectors with high residual at each step assuming that the majority of motion vectors at the initial step were inliers. Alternatively a robust cost function, e.g. Huber, can be employed or the whole process can be wrapped into a RANSAC framework. In a multi camera system, where the multiple cameras are attached to a rigid-body at known positions with respect to the vehicle coordinate system, the change of the relative pose is related between all cameras and can be estimated simultaneously by minimizing a cost function that incorporates the motion vectors obtained from all cameras simultaneously. In this case, the 6DOF relative pose of the rigid vehicle body can be transferred to the individual cameras as a rotation and translation about an arbitrary pivot point or preferably the origin of the vehicle coordinate system. Alternatively, the pose of each camera can be estimated separately and the median of the independent results taken as the final output as a simple way to improve robustness. Due to the well-known scale ambiguity, the translation vector can be estimated only up to an arbitrary scale. This is because if the feature positions and the camera position are scaled together, this change would not affect the location of the features in the camera images. Therefore, only five variables, i.e. five degrees of freedom (DoF) for the relative pose can be determined. This includes the full rotation, which refers to three degrees of freedom, and the direction of the translation vector, which adds two degrees of freedom. For this purpose, the translation vector is parameterized in spherical coordinates by its polar and azimuth angle. A fixed nominal length is used during optimization without loss of generality. This is replaced later by an estimated length obtained from the vehicle odometry. Note that an attempt to estimate the translation vector in three DoF, either by using Cartesian or polar coordinates will fail as the optimizer will naturally shrink the translation vector to zero length, producing a degenerate solution that results into the lowest cost.

Rigidity of using a camera system e.g. at a vehicle, where the cameras are arranged in known position relative to each other, can be exploited to recover the correct scale by matching features between cameras in addition to matching them between frames of the same camera.

The step of performing stereo image rectification to align epipolar lines in parallel to a horizontal axis in a vertical direction, is based on a known relative pose between the two key-frames, the second top-view image is rectified so that the epipolar lines are parallel to the horizontal axis and aligned in the vertical direction with the first top-view image. The baseline of the stereo pair is given by the length of the translation vector or the longitudinal component of the translation vector with respect to the vehicle coordinate system depending on which axis the stereo rectification is performed. A minimum baseline is guaranteed by skipping a variable number frames depending on vehicle motion. After the first key-frame has been acquired unconditionally, the ego-motion of the vehicle is estimated at each frame from the vehicle sensor odometry and when the estimated baseline reaches a minimum length the second key-frame is acquired.

It is possible to completely eliminate the dependency to vehicle sensor odometry for key frame selection and also for feature motion prediction at the feature matching step and obtain a good estimate of the planar vehicle motion solely by means of image processing. This can be achieved by applying a template matching algorithm on a large image patch extracted from the filtered or unfiltered top view image of any camera, preferably the rear or front camera which is typically unobstructed from 3D objects that may compromise the template matching result. For that purpose, a matched filter or simple correlator can be used, preferably realized in the frequency domain via FFTs for computational efficiency. Phase correlation can be also a suitable template matching method in this context. A window function can be applied initially on the extracted image patches to reduce the side-effects of circular convolution/correlation.

The step of performing stereo matching to create a disparity map out of the rectified stereo image uses a stereo block matching algorithm, which is applied on rectified frames to generate a disparity map. The 'disparity' map encodes 3D depth information as the horizontal distance between corresponding pixels in the stereo-rectified images. The Semi-Global Matching (SGM) algorithm is known to produce superior results with relatively high computational efficiency, but any stereo matching algorithm is applicable for the task.

The purpose of visual odometry in the context of this algorithm is to estimate a relative change of the camera pose in six degrees of freedom, i.e. rotation and translation along all three coordinate axes, between the two key-frames that are used for stereo image rectification and stereo-matching. This can be achieved by analyzing feature correspondences between the two key-frames. Hence, e.g. changes in the position and orientation or pose of a vehicle are incrementally estimated by analyzing image sequences obtained from on-board cameras.

Most vehicles are nowadays equipped with sensors that can measure linear speed and rotational speed, also referred to as yaw-rate, wheel RPM and steering angle. However, these measurements are subject to latency and their accuracy is limited since they do not account for dynamic effects such as tire slip. Moreover, rotational changes about the lateral and longitudinal axes, i.e. pitch and roll, which occur constantly due to a dynamic response of the vehicle to uneven ground, acceleration and turning, are typically not measured or the measurements are inaccurate and not fit for our purpose. To perform accurate stereo rectification of images obtained from a single camera on a moving vehicle at different instances in time, the six-DoF camera movement between frames shall be fully recovered.

The step of generating an elevation map out of the disparity map encodes 3D depth information as a horizontal distance between corresponding pixels in the stereo-rectified images. It is transformed to an actual depth map or elevation map via triangulation. The elevation map gives the height of object pixels with respect to the nominal ground plane where Z = 0. The elevation map can be analyzed on its own or in combination with 2D image gradients, e.g. to extract kerbs and other 3D features of interest. Measurements from more frames can be integrated to achieve more robust detection of such features.

The method comprises the additional step of performing image rectification for fisheye and/or perspective correction. This step can provide scale, affine and perspective invariance, for flat features on the ground plane or parallel planes. It can further provide uniform localization accuracy and implicit sub-pixel precision with increasing distance from the camera. An advantage of the top view is that it maps a rectangular region of interest (ROI) in world coordinates to a rectangular ROI in image coordinates, which simplifies the algorithm logic in terms of handling and processing such ROIs. The step of image rectification can be performed e.g. prior to the step of feature detection and matching. In this case the first rectified image can be used also as input to the stereo matcher i.e. as one of the two images comprising the stereo pair. The second image of the stereo pair must be rectified again, this time with epipolar alignment to the first image, regardless of the rectification performed initially to the second image for feature matching. Alternatively, the step of image rectification can be performed e.g. only as part of the step of stereo matching. One downside of the top-view correction is the reduced image quality at the periphery of the top-view image. This can be mitigated by limiting the extent of the top-view in world coordinates or the output image size or by increasing sensor resolution.

The step of performing image rectification for fisheye and/or perspective correction comprises using a look-up table for a nominal ground plane. The pre-built look-up table is preferably computed based on a known intrinsic and extrinsic calibration of the camera. It does not provide rotation invariance but this is not required as correlation based methods used for feature matching in a later step of the algorithm can cope well with the small rotations expected from the vehicle yaw-rate.

According to a modified embodiment of the invention the method comprises the additional step of performing image filtering to suppress noise, enhance details and features at a desired scale, and/or provide radiometric invariance. The radiometric invariance is provided for template-based feature matching so that this can be performed with less computationally expensive methods such as sum of absolute difference (SAD) or sum of squared differences (SSD). A Laplacian-of-Gaussian, Difference-of-Gaussians or similar filters can be used.

According to a modified embodiment of the invention the method comprises the additional step of performing down sampling of the key frame. Down sampling can be performed to reduce the amount of data to be processed by the described method. Down sampling is preferably performed prior to the step of performing feature matching or prior to the step of performing stereo matching.

According to a modified embodiment of the invention the step of performing a feature detection and matching comprises selecting features located at or close to ground level. Matching or tracking exclusively features near or on the ground plane gives first predictable correspondences due to approximately known ego-motion from vehicle odometry, and second uniform spatial distribution of features at a close range to the camera. This feature is to be understood without a hard constraint on this in terms of pose estimation, as true co-planarity cannot be guaranteed in the real world. The predictability of feature locations from the vehicle odometry and their assumed proximity to the nominal ground plane is highly advantageous for predictive feature matching and tracking. The uniform distribution of features on a grid is highly advantageous for outlier rejection and also for stability in the numerical solution of the pose estimation.

According to a modified embodiment of the invention the step of performing feature detection and matching comprises creating motion vectors for individual patches of the key frame. A motion vector refers to a match of a feature, in particular on a block grid, between two key-frames, where feature correspondences are stored as motion vectors. Each motion vector describes a 2D displacement of a feature between the two key-frames with respect to its reference position on the block grid in the first frame. Hence, coarse outliers can be rejected with a non-linear filter based on the geometric deviation of each motion vector from its neighbors, as discussed e.g. in WO 2016/087298 A1. According to this method, it can be assumed that motion vectors lie approximately on the same plane, which is true for a majority of cases. As a side-effect, motion vectors on a transition between planes, e.g. a road plane vs. a kerb plane, or on static 3D objects are also rejected. Such motion vectors are normally allowed as input to the pose estimation step described by this method as the pose estimation step does not impose a constraint for the motion vectors to be coplanar. However, assuming near-coplanar motion vectors for outlier rejection provides benefits, which outweigh the potential reduction in motion vectors used for pose estimation in some scenes.

According to a modified embodiment of the invention the step of performing pose estimation of the camera in respect to the two key frames comprises receiving vehicle odometry information and initializing pose estimation of the camera based on the vehicle odometry information. Hence an optimizer for performing visual odometry can be initialized from the vehicle odometry, which provides an approximate rotation about a vertical, also referred to as yaw, and an approximate translation vector, so that only two variables are left initialized to zero, which are pitch and roll. In this formulation, the optimizer converges very fast. An alternative approach comprises estimating the 3D location of features and camera parameters simultaneously with a different cost function. This would lead into a large number of variables and potentially slower convergence.

According to a modified embodiment of the invention the step of performing pose estimation of the camera in respect to the two key frames comprises estimating a 3D location of features and camera parameters simultaneously with a cost function. However, this requires a large number of variables and a can potentially result in slow convergence.

According to a modified embodiment of the invention the method comprises the additional step of receiving odometry information. Odometry information can be provided e.g. by a vehicle, in particular information regarding wheel movement, steering wheel angle, or others. The odometry information can be used as initialization in different steps since it provides a general indication in respect to expected results. Hence, e.g. in the case of the key frame selection, vehicle odometry can provide information with respect to key frame selection.

These and other aspects of the invention will be apparent from and elucidated with reference to the embodiments described hereinafter.

In the drawings:
- Fig. 1: shows a flow chart for performing a method for creation of an elevation map based on a single camera according to a first, preferred embodiment,
- Fig. 2: shows a comparison of two key frames for two subsequent points of time with motion vectors with respect to an image area of a camera according to the first embodiment,
- Fig. 3: shows a schematic view of motion vectors within a region of interest according to the first embodiment, and
- Fig. 4: shows a schematic of e triangulation method for generating an elevation map out of a disparity map according to the first embodiment.

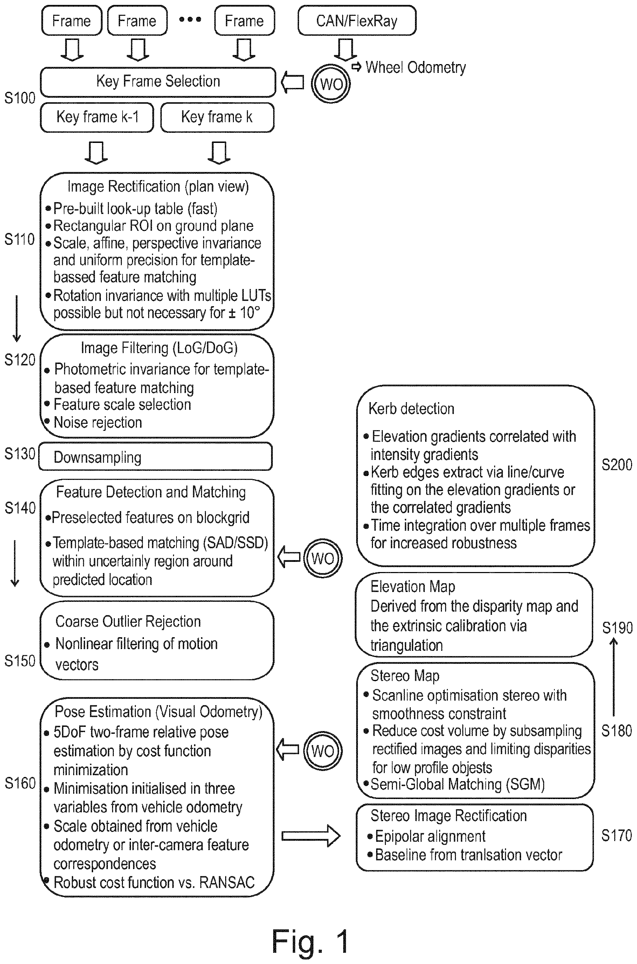

Figure 1 shows a flow chart of a method for creation of an elevation map based on a single camera. The single camera refers to the creation of the elevation map in view direction of the camera. Hence, no stereo cameras are required. Of course, multiple cameras can be provided to create an elevation map covering different directions.

The method comprises the following steps, as discussed below in detail.

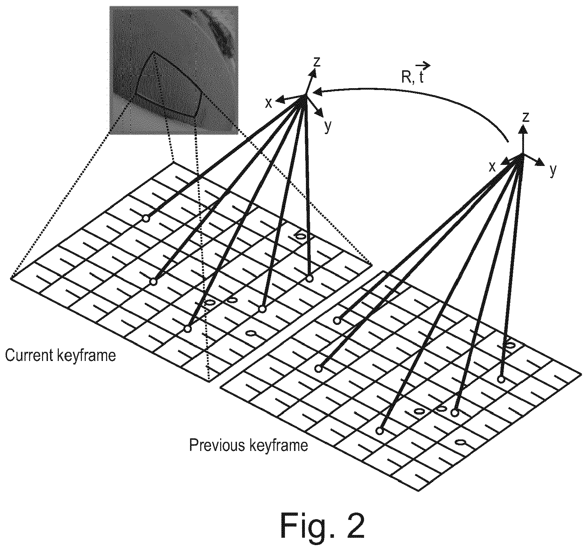

Step S100 refers to performing key frame selection to select at least two key frames at two different points of time out of frames provided by the camera. The two key frames are indicated as "key frame k-1" and "key frame k" in Fig. 1 to indicate that the key frames are in timing relation. The key frames can be seen in Fig. 2 with respect to an image area for two subsequent points of time. The two key frames selected at two different points of time out of frames provided by the camera. This comprises receiving odometry information by a vehicle, in particular information regarding wheel movement, steering wheel angle, or others. Key frame selection is based on vehicle odometer. Hence, the two key frames are selected based on a time difference between the two frames as defined based on the received vehicle odometry.

Step S110 refers to the step of performing image correction for fisheye and/or perspective distortion. This provides scale, affine and perspective invariance, for flat features on the ground plane or parallel planes. It further provides uniform localization accuracy and implicit sub-pixel precision with increasing distance from the camera. According to the top view, rectangular regions of interest (ROI) in world coordinates are mapped to rectangular ROIs in image coordinates. In an alternative embodiment, the step of image rectification is performed as part of the step of stereo matching, as discussed below. Image rectification provides also one of the two rectified views used for stereo matching, as discussed later. Image rectification for fisheye and/or perspective correction comprises using a look-up table for a nominal ground plane. The pre-built look-up table is preferably computed based on a known intrinsic and extrinsic calibration of the camera.

Step 120 refers the step of performing image filtering to suppress noise, enhance details and features at a desired scale, and/or provide radiometric invariance. Hence, spatial filtering is performed and a radiometric invariance is provided for subsequent template-based feature matching, so that this step can be performed with less computationally expensive methods such as sum of absolute difference (SAD) or sum of squared differences (SSD). A Laplacian-of-Gaussian, Difference-of-Gaussians or similar filters can be used.

Step S130 refers to the step of performing down sampling of the key frame to reduce the amount of data to be processed.

Step S140 refers to the step of performing feature detection and matching based on the selected at least two key frames at two different points of time. The step of performing feature detection and matching based on the selected two key frames at two different points of time. In this embodiment, an implementation e.g. used in a parking assistance system uses an 11×11 Laplacian on a top-view size of approximately 8m × 12.8m, which is rendered at an image output size of 1280x800 pixels with input image resolution of 1280x800 pixels. Accordingly, an effective resolution of the top top-view image results in approximately 1 cm/pixel. One aspect of the feature matching performed on the top-view is that the matched features lie in the majority near or on the ground plane. Hence, the matching location can be predicted very well in approximation from the vehicle odometry. This allows focused searches within uncertainty regions resulting in more reliable matches. The uncertainty regions can be derived from the expected maximum calibration error, vehicle odometry error and tolerances in the camera pitch-roll and height due to the dynamic movement of the vehicle. However, to simplify the algorithm, search regions of empirical constant size centered at each predicted feature matching location can be set.

As already mentioned above, detection and matching of features comprises selecting features located at or close to ground level. This feature is to be understood without a hard constraint on this in terms of pose estimation. Predictability of feature locations from the vehicle odometry and their assumed proximity to the nominal ground plane is highly advantageous for predictive feature matching and tracking. The uniform distribution of features on a grid is highly advantageous for outlier rejection and also for stability in the numerical solution of the pose estimation.

Furthermore, motion vectors for individual patches of the key frame are generated. A motion vector refers to a match of a feature, in particular on a block grid, between two key-frames, where feature correspondences are stored as motion vectors.

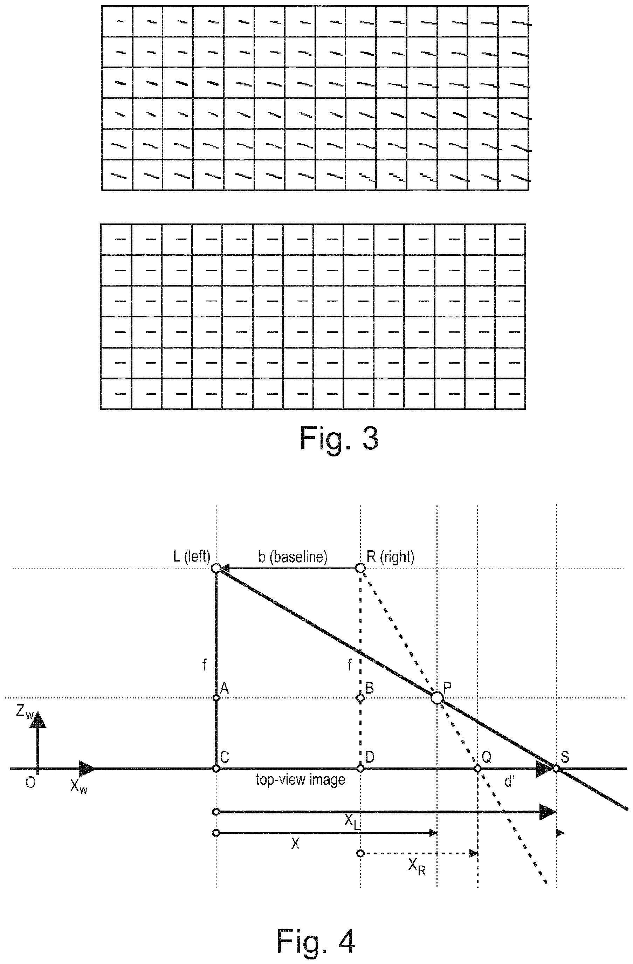

Step S150 refers to the step of performing coarse outlier rejection for the detected features. This step comprises that feature correspondences are stored as motion vectors, which can be seen e.g. in Fig. 3. Each motion vector describes a 2D displacement of a feature between the two key-frames with respect to its reference position on the block grid in the first frame. Coarse outliers are rejected with a non-linear filter based on the geometric deviation of each motion vector from its neighbors as in WO 2016/087298 A1. This method is based on the assumption that motion vectors lie approximately on the same plane which is true for the majority of cases. As a side-effect, motion vectors on the transition between planes, e.g. road vs. kerb, or on static objects with height are also rejected. Such motion vectors would be normally allowed in the pose estimation as there is no actual constraint for the motion vectors to lie on the same plane. This step provides a fairly clean set of motion vector for pose estimation.

Step S160 refers to the step of performing pose estimation of the camera in respect to the two key frames to remove movement of features due to camera movement. Accordingly, an estimation of a camera pose difference between the two key-frames is performed based on feature correspondences. The relative pose of the camera between the two key-frames is computed in a similar way as described in WO 2016/087298 A1 by minimizing a cost function. In contrast to document WO 2016/087298 A1, which solves a different problem, the new cost function minimizes the triangulation error of back-projected rays from the matched features of the two key-frames. The features from the first key-frame are back-projected into rays in world-space using a nominal pose, e.g. zero rotation and translation, and these rays are stored for reference. An optimizer, such as the Levenberg-Marquardt algorithm assigns, a trial rotation and translation to the camera. The features of the second key-frame are back-projected into rays in world-space using this trial rotation and translation. The components of the shortest perpendicular vector between the corresponding rays of the two key-frames are calculated for each feature and stored into the residue vector. The optimizer finds a rotation and translation that minimizes the sum of all squared components of the residue vector, essentially minimizing the skew line distance of the back-projected ray pairs (triangulation error).

In case outliers have not been eliminated completely, the minimizer can be invoked multiple times removing motion vectors as outliers at each step. In an alternative embodiment, a robust cost function, e.g. Huber, is employed or the whole process is wrapped into a RANSAC framework. In a multi camera system, where the cameras are attached to a rigid-body, the change of the relative pose is related between all cameras and can be estimated simultaneously by minimizing a cost function that incorporates the motion vectors obtained from all cameras simultaneously. In this case, the 6DOF relative pose of the rigid vehicle body can be transferred to the individual cameras as a rotation and translation about an arbitrary pivot point or preferably the origin of the vehicle coordinate system. Alternatively, the pose of each camera can be estimated separately and the median of the independent results taken as the final output as a simple way to improve robustness. Due to the well-known scale ambiguity, the translation vector can be estimated only up to an arbitrary scale. Therefore, only five variables, i.e. five degrees of freedom (DoF) for the relative pose can be determined. This includes the full rotation, which refers to three degrees of freedom, and the direction of the translation vector, which adds two degrees of freedom. For this purpose the translation vector is parameterized in spherical coordinates by its polar and azimuth angle. A fixed nominal length is used during optimization without loss of generality. This is replaced later by an estimated length obtained from the vehicle odometry.

Rigidity of using a camera system e.g. at a vehicle, where the cameras are arranged in known position relative to each other, can be exploited to recover the correct scale by matching features between cameras in addition to matching them between frames of the same camera.

The step of performing pose estimation of the camera in respect to the two key frames comprises receiving vehicle odometry information and initializing pose estimation of the camera based on the vehicle odometry information. Hence the optimizer for performing visual odometry is initialized from the vehicle odometry, which provides an approximate rotation about a vertical, also referred to as yaw, and an approximate translation vector, so that only two variables are left initialized to zero, which are pitch and roll. This helps the optimizer to converge very fast in just a few iterations.

Step S170 refers to the step of performing stereo image rectification to align epipolar lines in parallel to a horizontal axis in a vertical direction. The step of performing stereo image rectification to align epipolar lines in parallel to a horizontal axis in a vertical direction is based on a known relative pose between the two key-frames. The second top-view image is rectified so that the epipolar lines are parallel to the horizontal axis and aligned in the vertical direction with the first to-view image. The baseline of the stereo pair is given by the longitudinal component of the translation vector with respect to the vehicle coordinate system. A minimum baseline is guaranteed by skipping a variable number frames depending on vehicle motion. After the first key-frame has been acquired unconditionally, the ego-motion of the vehicle is estimated at each frame from the vehicle odometry and when the estimated baseline reaches a minimum length the second key-frame is acquired.

Step S180 refers to the step of performing stereo matching to create a disparity map out of the rectified stereo image. Accordingly, a stereo block matching algorithm is applied on the rectified frames to generate a disparity map. To perform accurate stereo rectification of images obtained from a single camera on a moving vehicle at different instances in time, the six-DoF camera movement between frames shall be fully recovered. Hence, the purpose of visual odometry in the context of this algorithm is to estimate a relative change of the camera pose in six degrees of freedom, i.e. rotation and translation along all three coordinate axes, between the two key-frames that are used for stereo image rectification and stereo-matching. This can be achieved by analyzing feature correspondences between the two key-frames. Hence, e.g. changes in the position and orientation or relative pose of each camera mounted on the vehicle. In one formulation of the cost function we may consider the vehicle as a rigid body and estimate its 6DoF motion instead of the independent camera motion. Then transfer this global motion to individual camera motions by applying the rigid-body constraints. The rotation is always the same for all cameras as is for the rigid-body but their translation differs when the vehicle is rotating around any axis e.g. while turning.

Step S190 refers to the step of generating an elevation map out of the disparity map. The disparity map encodes 3D depth information as a horizontal distance between corresponding pixels in the stereo-rectified images. It is transformed to an actual depth map or elevation map trivially via triangulation. The elevation map gives the height of object pixels with respect to the nominal ground plane where Z = 0. The conversion is performed as follows, as is discussed with respect to Fig. 4.

The depth z refers to the product of focal length and the baseline divided by the disparity i.e. z = f * b / d, where f is the focal length of the virtual pinhole camera (a virtual pinhole camera with different focal length is assigned to each physical camera. The focal length is the distance of the physical camera from the nominal ground plane), b is the baseline, and d is the conventional disparity of rectified images without shifting. Due to shifting the left image towards the right image by the baseline b in the stereo rectification step of the second image, the measured disparity d' becomes equal to d' = d + b, therefore the conventional disparity results in d = d'- b. Considering this adjustment, the depth z results in z = f * b / (d' - b), where b < 0 and d' > 0 for forward motion and f > 0 always by convention. With d' = 0 => z = -f as expected.

The height h from the ground is h = z + f = f * b / (d - b) + f. With d = 0 => z = -f and h = z + f = 0 as expected. This can be simplified as h = f * d / (d - b) and equivalently d = h * b / (h - f), where d and h increase together, so that d < 0 <=> h < 0, d = 0 <=> h = 0, and d > 0 <=> h > 0.

The latter formula is useful for calculating the disparity upper and lower bounds given the stereo parameters, e.g. with b = -200 mm, f = 1000 mm, hₘₐₓ= 500 mm => dₘₐₓ= 500 * (-200) / (500 - 1000) = 200 mm, with a top-view scale of 10 mm/pixel => dₘₐₓ= 20 pixels.

For the x' and y' positions, the following formulas apply: x' = -(x -x_{c}) * b / (d' - b), and y' = -(y -y_{c}) * b / (d' - b), where x and y have opposite sign from the baseline and (x_{c},y_{c}) is the principal point of the virtual pinhole camera.

In Fig. 4, f refers to the distance LC equal RD, b refers to the distance RL, z refers to the distance LA equal RB, x refers to the distance AP, X_{L} refers to the distance CS, and X_{R} refers to the distance DQ.

The method for creation of an elevation map based on a single camera comprising method steps S100 to S190 forms part of a method for performing kerb detection based on a single camera. Hence, the method comprises method steps S100 to S190, as discussed above. The method for detection of kerbs is used in a parking assistance system to localize the parking vehicle against a detected kerb.

Additionally, the method of performing kerb detection first performs steps S100 to S190. Subsequently, in steps S200, the method comprises the step of performing kerb detection based on the created elevation map.

Line or curve fitting is applied on gradients to detect elongated 3D structures such as kerbs. The elevation gradients are correlated with 2D image intensity gradients to maximize the response of the filter. When there is a kerb transition in 3D there is also usually an edge visible in the 2D image. Elevation gradient vectors and image gradient vectors are correlated by their dot product. Repeating the detection / curve fitting over multiple pairs of key frames close in time robustifies the results, as an integration time over time is performed.

## Claims

1. Method for creation of an elevation map based on a single camera, comprising the steps of
performing key frame selection to select at least two key frames at two different points of time out of frames provided by the camera,
performing feature detection and matching based on the selected at least two key frames at two different points of time,
performing coarse outlier rejection for the detected features,
performing pose estimation of the camera in respect to the two key frames, performing stereo image rectification to align epipolar lines in parallel to a horizontal axis in a vertical direction,
performing stereo matching to create a disparity map out of the rectified stereo image, and
generating an elevation map out of the disparity map,
the method comprising
the additional step of performing image rectification for fisheye and/or perspective correction using a look-up table for a nominal ground plane.

2. Method according to claim 1, wherein the method comprises the additional step of performing image filtering to suppress noise, enhance details and features at a desired scale, and/or provide radiometric invariance.

3. Method according to claim 1 or 2, wherein the method comprises the additional step of performing down sampling of the key frame.

4. Method according to any preceding claim, wherein the step of performing a feature detection and matching comprises selecting features located at or close to ground level.

5. Method according to any preceding claim, wherein the step of performing a feature detection and matching comprises creating motion vectors for individual patches of the key frame.

6. Method according to any preceding claim, wherein the step of performing pose estimation of the camera in respect to the two key frames comprises receiving vehicle odometry information and initializing pose estimation of the camera based on the vehicle odometry information.

7. Method according to any preceding claim, wherein the step of performing pose estimation of the camera in respect to the two key frames comprises estimating camera parameters by minimizing a cost function or by estimating the 3D location of features and camera parameters simultaneously by minimizing a different cost function.

8. Method according to any preceding claim, wherein the method comprises the additional step of receiving odometry information.

9. Method for performing kerb detection based on a single camera, comprising the steps of
performing creation of an elevation map according to the method of any of preceding claims 1 to 8, and
performing kerb detection based on the created elevation map.

10. Camera system comprising a camera and a processing unit, whereby the camera is adapted to provide frames to the processing unit, and the processing unit is adapted to perform the method of any of preceding claims 1 to 9.

11. Driving assistance system comprising a camera system according to preceding claim 10.

12. Motorized vehicle comprising a driving assistance system as specified in preceding claim 11.

## Patentansprüche

1. Verfahren zur Erstellung einer Höhenkarte basierend auf einer einzigen Kamera, das die folgenden Schritte umfasst:
Durchführen einer Schlüsselframeauswahl, um mindestens zwei Schlüsselframes zu zwei unterschiedlichen Zeitpunkten aus durch die Kamera bereitgestellten Frames auszuwählen,
Durchführen einer Merkmalsdetektion und eines Merkmalsabgleichs basierend auf den ausgewählten mindestens zwei Schlüsselframes zu zwei unterschiedlichen Zeitpunkten,
Durchführen einer Zurückweisung grober Ausreißer für die detektierten Merkmale,
Durchführen einer Haltungsschätzung der Kamera bezüglich der zwei Schlüsselframes,
Durchführen einer Stereobildentzerrung, um epipolare Linien in einer vertikalen Richtung parallel zu einer horizontalen Achse auszurichten,
Durchführen eines Stereoabgleichs, um aus dem entzerrten Stereobild eine Disparitätskarte zu erstellen, und
Erzeugen einer Höhenkarte aus der Disparitätskarte,
wobei das Verfahren den zusätzlichen Schritt zum Durchführen einer Bildentzerrung zur Fisheye- und/oder Perspektivenkorrektur unter Verwendung einer Lookup-Tabelle für eine Nennbodenebene umfasst.

2. Verfahren nach Anspruch 1, wobei das Verfahren den zusätzlichen Schritt zum Durchführen einer Bildfilterung umfasst, um Rauschen zu unterdrücken, Details und Merkmale in einem gewünschten Maßstab zu verbessern und/oder radiometrische Invarianz bereitzustellen.

3. Verfahren nach Anspruch 1 oder 2, wobei das Verfahren den zusätzlichen Schritt zum Durchführen von Downsampling des Schlüsselframes umfasst.

4. Verfahren nach einem die vorhergehenden Ansprüche, wobei der Schritt zum Durchführen einer Merkmalsdetektion und eines Merkmalsabgleichs Auswählen von Merkmalen, die sich auf oder Nahe der Bodenebene befinden, umfasst.

5. Verfahren nach einem der vorhergehenden Ansprüche, wobei der Schritt zum Durchführen einer Merkmalsdetektion und eines Merkmalsabgleichs Erstellen von Bewegungsvektoren für einzelne Flächen des Schlüsselframes umfasst.

6. Verfahren nach einem der vorhergehenden Ansprüche, wobei der Schritt zum Durchführen einer Haltungsschätzung der Kamera bezüglich der zwei Schlüsselframes Empfangen von Fahrzeugodometrieinformationen und Initialisieren einer Haltungsschätzung der Kamera basierend auf den Fahrzeugodometrieinformationen umfasst.

7. Verfahren nach einem der vorhergehenden Ansprüche, wobei der Schritt zum Durchführen einer Haltungsschätzung der Kamera bezüglich der zwei Schlüsselframes Schätzen von Kameraparametern durch Minimieren einer Kostenfunktion oder durch gleichzeitiges Schätzen des 3D-Standorts von Merkmalen und von Kameraparametern durch Minimieren einer anderen Kostenfunktion umfasst.

8. Verfahren nach einem der vorhergehenden Ansprüche, wobei das Verfahren den zusätzlichen Schritt zum Empfangen von Odometrieinformationen umfasst.

9. Verfahren zum Durchführen einer Bordsteindetektion basierend auf einer einzigen Kamera, das die folgenden Schritte umfasst:
Durchführen einer Erstellung einer Höhenkarte gemäß dem Verfahren nach einem der vorhergehenden Ansprüche 1 bis 8 und
Durchführen einer Bordsteindetektion basierend auf der erstellten Höhenkarte.

10. Kamerasystem, das eine Kamera und eine Verarbeitungseinheit umfasst, wobei die Kamera dazu ausgelegt ist, der Verarbeitungseinheit Frames bereitzustellen, und die Verarbeitungseinheit dazu ausgelegt ist, das Verfahren nach einem der vorhergehenden Ansprüche 1 bis 9 durchzuführen.

11. Fahrassistenzsystem, das ein Kamerasystem nach dem vorhergehenden Anspruch 10 umfasst.

12. Motorisiertes Fahrzeug, das ein Fahrassistenzsystem nach dem vorhergehenden Anspruch 11 umfasst.

## Revendications

1. Procédé de création d'une carte d'élévation basé sur une seule caméra, comprenant les étapes de réalisation d'une sélection d'images clés pour sélectionner au moins deux images clés à deux instants différents parmi les images fournies par la caméra,
réalisation d'une détection et comparaison de caractéristiques en fonction des au moins deux images clés sélectionnées à deux instants différents, réalisation d'un rejet d'aberrations grossières des caractéristiques détectées,
réalisation d'une estimation de poses de la caméra relativement aux deux images clés,
réalisation d'une rectification d'images stéréo pour aligner des lignes épipolaires en parallèle à un axe horizontal dans une direction verticale, réalisation d'une correspondance stéréo pour créer une carte de disparité à partir de l'image stéréo rectifiée, et
génération d'une carte d'élévation à partir de la carte de disparité,
le procédé comprenant l'étape supplémentaire de réalisation d'une rectification d'image pour une correction de distorsion fisheye et/ou de perspective à l'aide d'une table de consultation pour un plan de sol nominal.

2. Procédé selon la revendication 1, le procédé comprenant l'étape supplémentaire de réalisation d'un filtrage d'image pour supprimer le bruit, améliorer des détails et des caractéristiques à une échelle souhaitée et/ou fournir une invariance radiométrique.

3. Procédé selon la revendication 1 ou 2, le procédé comprenant l'étape supplémentaire de réalisation d'un sous-échantillonnage de l'image clé.

4. Procédé selon n'importe quelle revendication précédente, dans lequel l'étape de réalisation d'une détection et comparaison de caractéristiques comprend la sélection de caractéristiques situées au niveau ou près du sol.

5. Procédé selon n'importe quelle revendication précédente, dans lequel l'étape de réalisation d'une détection et comparaison de caractéristiques comprend la création de vecteurs de mouvement pour des parties individuelles de l'image clé.

6. Procédé selon n'importe quelle revendication précédente, dans lequel l'étape de réalisation de l'estimation de poses de la caméra relativement aux deux images clés comprend la réception d'informations odométriques de véhicule et l'initialisation d'une estimation de poses de la caméra en fonction des informations odométriques de véhicule.

7. Procédé selon n'importe quelle revendication précédente, dans lequel l'étape de réalisation de l'estimation de poses de la caméra relativement aux deux images clés comprend l'estimation de paramètres de caméra en minimisant une fonction de coût ou en estimant l'emplacement 3D de caractéristiques et de paramètres de caméra simultanément en minimisant une fonction de coût différente.

8. Procédé selon n'importe quelle revendication précédente, le procédé comprenant l'étape supplémentaire de réception d'informations odométriques.

9. Procédé de réalisation d'une détection de bordures basé sur une seule caméra, comprenant les étapes de
réalisation d'une la création d'une carte d'élévation conformément au procédé selon l'une quelconque des revendications précédentes 1 à 8, et
réalisation d'une détection de bordures en fonction de la carte d'élévation créée.

10. Système de caméra comprenant une caméra et une unité de traitement, la caméra étant conçue pour fournir des images à l'unité de traitement, et l'unité de traitement étant conçue pour exécuter le procédé selon l'une quelconque des revendications précédentes 1 à 9.

11. Système d'aide à la conduite comprenant un système de caméra selon la revendication précédente 10.

12. Véhicule motorisé comprenant un système d'aide à la conduite tel que spécifié à la revendication précédente 11.
